# EUROPEAN PATENT SPECIFICATION

(11) **EP 2 474 972 B1**
(45) Date of publication and mention of the grant of the patent: **04.12.2013**
(21) Application number: 11150490.8
(22) Date of filing: 10.01.2011
(51) Int. Cl.: G10L 13/06

(54) **Text-to-speech technology with early emission**
Text-zu-Sprache-Technologie mit früher Emission
Technologie texte-voix avec émission précoce

(43) Date of publication of application: 11.07.2012
(73) Proprietor: Svox AG, 8048 Zürich (CH)
(72) Inventor: Wouters, Johan, 8047 Zürich (CH); Safra, Schamai, 8057 Zürich (CH); Holm, Bleicke, 8049 Zürich (CH)
(74) Representative: PATWIL AG

(56) References cited:
- JON R W YI ET AL: "A FLEXIBLE, SCALABLE FINITE-STATE TRANSDUCER ARCHITECTURE FOR CORPUS-BASED CONCATENATIVE SPEECH SYNTHESIS", 20001016, 16 October 2000 (2000-10-16), XP007011011,

## Description

### Technical Field

Embodiments of the present invention generally relate to Text-to-Speech (TTS) technology for creating spoken messages starting from an input text.

### Background Art

Corpus based speech synthesis is a technique to generate a speech signal by selecting short fragments of speech, waveform units, from a waveform unit database and concatenating them.

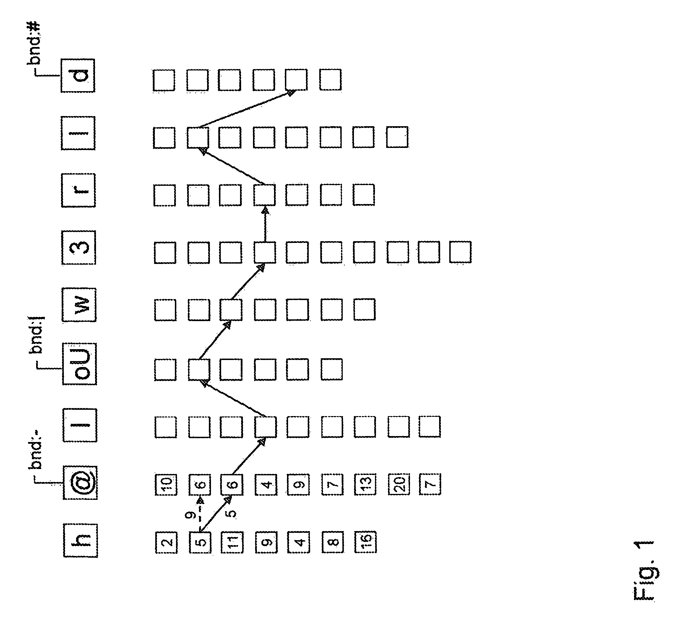

The selection of suitable waveform units is based on the combination of a target cost and a concatenation cost. This is illustrated in fig. 1. An input text to be synthesized is converted to a sequence of target elements. A target element may correspond to a phoneme with certain contextual properties. For each target element a set of candidate waveform units is retrieved from the unit database. A target cost is calculated for each candidate unit based on comparing the contextual properties of the candidate unit and the target element.

Assume a desired pitch of F0 is known for each target element. Then one component of the target cost is based on the distance between the F0 of a candidate unit and the desired pitch.

In a simplistic unit selection framework, for each target element the candidate unit is selected that has the lowest target cost. However the candidate units with the lowest target cost for two adjacent target elements TargA and TargB may not concatenate well. Assume for example that the best candidate unit A1 for TargA has an F0 that is 50 Hz below the desired F0, and the best candidate unit B1 for TargB has an F0 that is 50 Hz above the desired F0. The second best candidate unit B2 for TargB has an F0 that is 60 Hz below the desired F0. Concatenating A1 and B1 would lead to a large F0 jump. B2 is a better choice even though it has a somewhat larger target cost.

In an improved unit selection framework, a concatenation cost is defined between each pair of candidate units corresponding to adjacent target elements. The optimal sequence of candidate units is the sequence with the lowest sum of target and concatenation costs. The sum of the target and concatenation costs along a sequence of candidate units is called the path cost.

In fig 1 example target costs are shown inside the boxes representing waveform units for the first two target elements. Example concatenation costs are visualized above the arrows connecting the waveform units.

A simplistic but computationally expensive way to determine the optimal unit sequence is to calculate the path cost for all possible unit sequences and keep the sequence with the lowest cost. If there are m target elements in the sentence and an average of n candidate units per target element, the computational complexity of the simplistic algorithm is O(n^{m}).

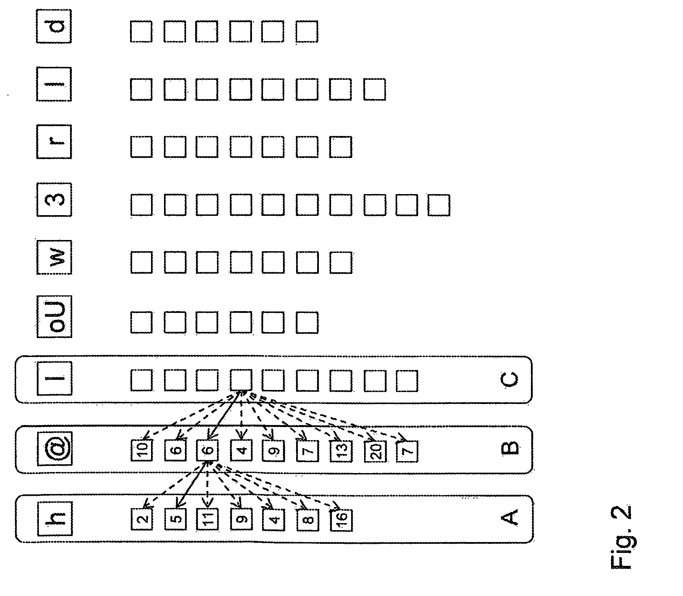

The optimal sequence can be calculated more efficiently using the Viterbi algorithm. As shown in fig. 2, the Viterbi algorithm starts by determining the optimal predecessor of each candidate unit By of the second target element. The optimal predecessor is the candidate unit Ax for the first target element for which the path cost is lowest. The path cost is the sum of the target costs of Ax and By and the concatenation cost between Ax and By. Note that in fig. 2 the optimal predecessor must be determined for each unit. In the figure there should be left pointing arrows fanning out of each unit. For simplicity the arrows are only shown for one unit in the sets B and C.

The Viterbi algorithm proceeds from left to right through the sets of candidate units for subsequent target elements. After determining the optimal predecessors and the path costs for the candidate units By of the second target element, the set of units for the third target element is investigated. For each candidate unit Cz of the third target element the cost of the optimal path from the beginning up to Cz is calculated by adding the path cost of the optimal predecessor, the concatenation cost between the optimal predecessor and Cz, and the target cost of Cz.

Subsequently the set of candidate units for the fourth target element is investigated, and so on until the last target element in the sentence. The calculation of path costs for each set of candidate units from the beginning of the sentence until the end of the sentence is called the forward step of the Viterbi algorithm.

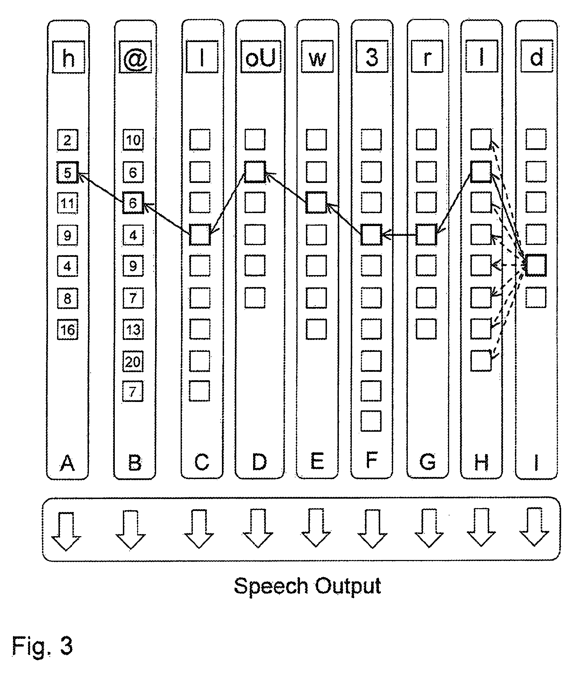

The candidate unit with the lowest path cost in the set of candidate units for the last target element is marked optimal. Then a backtracking step starting from the final target element is performed. From the optimal unit for the final target element, the optimal predecessor P is selected. Then the optimal predecessor of P is selected. The backtracking continues until the optimal unit in the set of units Ax for the first target element is found. The chain of optimal predecessors is the optimal unit sequence. The backtracking step of the Viterbi algorithm is illustrated in fig. 3.

The Viterbi algorithm is efficient in that not all possible paths have to be calculated. If there were on average n candidate waveform units per target element and m target elements in a sentence, then the number of possible paths is n^{m}. The Viterbi algorithm has a complexity of O(m*n²). It can be shown that the Viterbi solution is the best solution; calculating all possible paths and their total cost does not lead to finding a better path.

One disadvantage of the Viterbi algorithm is that the optimal unit sequence is not known until the path costs for the last target element have been calculated and the backtracking step has been performed. The longer the sentence, the more calculations are needed. Therefore the latency, i.e. the amount of computation time before the signal in the form of the selected waveform units for all target elements can be emitted, increases with the length of a sentence. On devices with limited CPU, the user may wait for several seconds or minutes before the TTS starts speaking. This is disadvantageous for the user experience.

Another disadvantage of the Viterbi algorithm is that for each candidate unit a backpointer has to be stored until the last target element of the sentence has been treated. The amount of memory required to perform the Viterbi search grows linearly with the length of the sentence and with the number of candidate units considered per target element.

US 6 173 263 B1 discloses a method and system for performing concatenative speech synthesis using a Viterbi search mechanism.

Jon R. W. Yi, James R. Glass, and I. Lee Hetherington, A Flexible, Scalable Finite-State Transducer Architecture For Corpus-Based Concatenative Speech Synthesis, ICSLP, 2000 proposes to reduce the latency by identifying target elements where the optimal path calculation can be terminated even though the end of the sentence has not been reached. Speech pauses are a suitable place for this, because the concatenation cost within a speech pause is close to zero. Truncating the Viterbi search at speech pauses reduces latency but the latency still varies linearly with the length of a phrase between pauses. In long sentences without a pause either the latency is high or the Viterbi search must be truncated in a different speech segment such as the closure of a plosive. This solution may result in a glitch if the closure is short or not silent. Moreover there is still no guaranteed low latency if a sentence does not have a plosive in a suitable place.

Nobuyuki Nishizawa and Hisashi Kawai, A Short-Latency Unit Selection Method With Redundant Search For Concatenative Speech Synthesis, Proc. ICASSP 2006 propose a unit selection method with redundant search for concatenative speech synthesis. Branches of the search tree with good subsequences are kept longer in the beam search than in a naromel beam search. This approach yields a constant latency, but the quality of the speech output is degraded.

A more efficient solution should reduce latency and ensure a high quality of the speech output.

### Summary

The present invention discloses a method, a computer program product and a computer readable medium comprising program code according to claims 1,10 and 11 for performing concatenative speech synthesis with a low latency and a high quality of the speech output.

The method is creating a speech output from a succession of input linguistic target elements including target characteristics, where the speech output is formed by concatenating a sequence of selected waveform units, each selected waveform unit corresponding to an input linguistic target element. The method is comprising the following steps:
Receiving the succession of input linguistic target elements including target characteristics in a time ranked order, starting with an initial target element and ending with a final target element, the ranked order increasing with time corresponding to a forward direction and the ranked order decreasing with time corresponding to a backward direction.
Assigning to each target element a set of candidate waveform units including candidate characteristics provided from a database of waveform units.
Allocating target costs to the assigned candidate waveform units, the target costs expressing a mismatch between the candidate characteristics and the target characteristics of the target element.
Allocating concatenation costs to pairs of successive candidate waveform units assigned to pairs of successive target elements.
Allocating path costs to waveform unit sequences assigned to a succession of target elements, where the path costs Q are a function of target costs and concatenation costs of the waveform units in the sequence.
Initializing a current succession of target elements by setting it to the initial target element and initializing a current set of waveform unit sequences assigned to the current succession of target elements by setting each waveform unit sequence in the set to a different candidate waveform unit assigned to the initial target element.
Performing an iterative sequence of forward steps, where a forward step consists of
   extending the current succession of target elements to form a new succession of target elements, by appending the next target element in the forward direction,
   calculating a new set of waveform unit sequences assigned to the new succession of target elements by prepending to each candidate waveform unit assigned to the next target element the waveform unit sequence from the current set of waveform unit sequences for which the path cost of the resulting waveform unit sequence is the lowest, and
   renaming the new target element succession to the current target element succession for the next forward step.
Finishing the iterative sequence of forward steps at an intermediate target element that precedes the final target element.
Initializing a current reduced set of waveform unit sequences by setting it to the set of waveform unit sequences assigned to the succession of target elements ending in the intermediate target element.
Performing an iterative sequence of backward steps, where a backward step consists of,
   removing from each waveform unit sequence of the current reduced set of waveform unit sequences the last waveform unit, resulting in a set of truncated waveform unit sequences,
   removing duplicate waveform unit sequences from the set of truncated waveform unit sequences, resulting in a new reduced set of waveform unit sequences, and
   renaming the new reduced set of waveform unit sequences to the current reduced set of waveform unit sequences for the next backward step.
Finishing the iterative sequence of backward steps when a predetermined limit is reached for one of the number of backward steps and the number of waveform unit sequences in the current reduced set of waveform unit sequences.
Designating one of the waveform unit sequences in the current reduced set of waveform unit sequences as the selected waveform unit sequence.
Creating a speech output by concatenating the waveform units from the selected waveform unit sequence to one another.
Resuming the iterative sequence of forward steps at the intermediate target element by keeping in the set of waveform unit sequences assigned to the succession of target elements ending in the intermediate target element the waveform unit sequences that start with the selected waveform unit sequence, and removing from the start of each kept waveform unit sequence the selected waveform unit sequence.
Performing an iterative sequence of backward steps at a new intermediate target element, designating a new selected waveform unit sequence, and concatenating the waveform units from the new selected waveform unit sequence to the speech output.
Repeating the steps of resuming the iterative sequence of forward steps and performing an iterative sequence of backward steps until the iterative sequence of forward steps has reached the final target element, where from the set of waveform unit sequences assigned to the succession of target elements ending in the final target element the waveform unit sequence with the lowest path cost is designated as the selected waveform unit sequence and the waveform units from the selected waveform unit sequence are concatenated to the speech output.

In the step of performing an iterative sequence of forward steps calculating a new set of waveform unit sequences assigned to the new succession of target elements means selecting from all possible unit sequences just one sequence per candidate waveform unit assigned to the next target element. Each selected sequence has the lowest path cost of all possible sequences with the same waveform unit at the end of the sequence.

In the step of performing an iterative sequence of backward steps removing duplicate waveform unit sequences from the set of truncated waveform unit sequences means that in the set of truncated waveform unit sequences the same sequence can occur several times and only one instance of the sequence is kept.

If the iterative sequence of backward steps is finished when the number of waveform unit sequences in the current reduced set of waveform unit sequences is exactly one, the disclosed method emits the same optimal sequence of selected waveform units for all target elements of a succession of input linguistic target elements starting with an initial target element and ending with a final target element as the standard Viterbi search but the optimal units become available in a pipelined manner without requiring the calculation of path costs for the final target element and without complete backtracking form the final to the initial target element. The latency, i.e. the amount of computation time before outputting selected waveform units for a beginning part of the target sequence is much shorter than in a Viterbi search.

For the selected waveform units of the beginning part of the target sequence which have been outputted there is no need for further storing back pointers. Compared to the Viterbi algorithm there is less amount of memory required.

In preferred embodiments the iterative sequences of forward steps and/or the iterative sequences of backward steps are optimized. Such an optimization can be made by defining specific finishing criteria for the iterative sequences.

In a preferred embodiment finishing the at least one iterative sequence of forward steps at an intermediate target element D that precedes the final target element occurs after a predetermined number of forward steps. An optimal predetermined number can be adapted to the number of candidate waveform units per target element and the number of target elements in a sentence. If there are only a few candidate waveform units per target element then a small number of forward steps can already cause a selected waveform unit sequence to be found in the following iterative sequence of backward steps. If there are many candidate waveform units per target element then it might be necessary to make several forward steps in order to find a selected waveform unit sequence in the following iterative sequence of backward steps. In a preferred embodiment the predetermined number of forward steps will be smaller than seven.

If the predetermined number of forward steps is one, then after each forward step there will be an iterative sequence of backward steps and each next target element in forward direction is an intermediate target element for which the iterative sequence of backward steps is performed. If the predetermined number of forward steps is three, then after every third forward step there will be an iterative sequence of backward steps. Each sequence of forward steps is finished after a predetermined number of next target elements in forward direction have been appended to the succession of target elements and in specific embodiments the predetermined number is larger than one.

In one embodiment the stop criterion for finishing the iterative sequence of backward steps is the occurrence of a predetermined number of backward steps. If at the end of the backward steps the number of waveform unit sequences in the current reduced set of waveform unit sequences is one then this unique waveform unit sequence is designated as the selected waveform unit sequence. If at the end of the iterative sequence of backward steps there is more than one waveform unit sequence in the current reduced set of waveform unit sequences, then one of these waveform unit sequences in the current reduced set of waveform unit sequences has to be designated as the selected waveform unit sequence. The designation can be made according to the path cost of the waveform unit sequences. The waveform unit sequence with the lowest path cost is designated as the selected waveform unit sequence. If more than one waveform unit sequence has the same lowest path cost, the first one is taken.

In a preferred embodiment the stop criterion for finishing the iterative sequence of backward steps is the occurrence of a given maximum number of waveform unit sequences in the current reduced set of waveform unit sequences. The given maximum number is preferably one, which means that there is just one unique waveform unit sequence in the current reduced set of waveform unit sequences at the end of an iterative sequence of backward steps. The unique new waveform unit sequence is designated as the selected waveform unit sequence. A designation of a selected waveform unit sequence as described above has to be made if the given maximum number is greater than one.

A speech output is created by concatenating the waveform units from the selected waveform unit sequence to one another, where outputting will start before reaching the final target element. The length of outputted waveform unit sequences and the time when output occurs can be controlled in such a way that the speech output sounds natural. Adjusting one of the predetermined number of next target elements in forward direction and the predetermined number of waveform unit sequences in the reduced set of waveform unit sequences can guarantee a speech output after a predetermined amount of computation time. The steps of resuming the iterative sequence of forward steps and performing an iterative sequence of backward steps are repeated until the iterative sequence of forward steps has reached the final target element, where from the set of waveform unit sequences assigned to the succession of target elements ending in the final target element the waveform unit sequence with the lowest path cost is designated as the selected waveform unit sequence and the waveform units from the selected waveform unit sequence are concatenated to the speech output.

The iterative sequence of backward steps is described in a space of sets of waveform unit sequences by removing from each waveform unit sequence of the current reduced set of waveform unit sequences the last waveform unit. The new reduced set of waveform unit sequences is assigned to a new reduced succession of target elements where the new last target element is the next target element in the backward direction starting from the current last target element of the current succession of target elements. Removing the last waveform unit causes an optimal predecessor of the removed waveform unit to become the new last waveform unit of the reduced waveform unit sequence. This optimal predecessor can be used to represent the reduced waveform unit sequence. And therefore a set of truncated waveform unit sequences would be represented by a set of optimal predecessors, where the optimal predecessors are a subset of the candidate waveforms assigned to the new last target element of the new succession of target elements.

Optimal predecessors are units which can be elements of more than one waveform unit sequence. In a description with optimal predecessors there is no need for a step of removing duplicate waveform unit sequences since each optimal predecessor is representing one waveform unit sequence ending with this predecessor.

Finishing the iterative sequence of backward steps can be phrased with predecessors, where finishing occurs when a predetermined limit is reached for one of the number of backward steps and the number of optimal predecessors in the current backward step. Designating a selected waveform unit sequence can be phrased as designating a selected optimal predecessor. For the step of creating a speech output further optimal predecessors are looked for by searching for a sequence of optimal predecessors of the selected optimal predecessor, where the further optimal predecessors were not yet used for creating speech output.

In a preferred embodiment a waveform unit sequence is represented by the last waveform unit in the sequence and a backpointer is kept for each candidate waveform unit assigned to a target element. During each forward step the backpointer of each candidate waveform unit assigned to the next target element is set to an optimal predecessor waveform unit resulting in the lowest path cost of all waveform unit sequences ending in said candidate waveform unit, and the backpointer of the initial waveform unit of a waveform unit sequence is set to a predetermined constant.

The computer memory occupied by candidate waveform units assigned to a target element can be freed when one of the candidate waveform units is an element of a selected waveform unit sequence.

### Brief description of the figures

- Fig. 1: is a schematic diagram with target elements, corresponding waveform units and a sequence of selected waveform units.
- Fig. 2: is a schematic diagram with target elements and corresponding waveform units visualizing forward steps of the Viterbi algorithm (determining optimal predecessors of waveform units).
- Fig. 3: is a schematic diagram with target elements and corresponding waveform units visualizing the backtracking step of the Viterbi algorithm.
- Fig. 4 to 7: are schematic diagrams with target elements and corresponding candidate waveform units visualizing designating selected waveform unit sequences assigned to successions of target elements and emitting selected waveform units sequences.

### Detailed Description of Preferred Embodiments

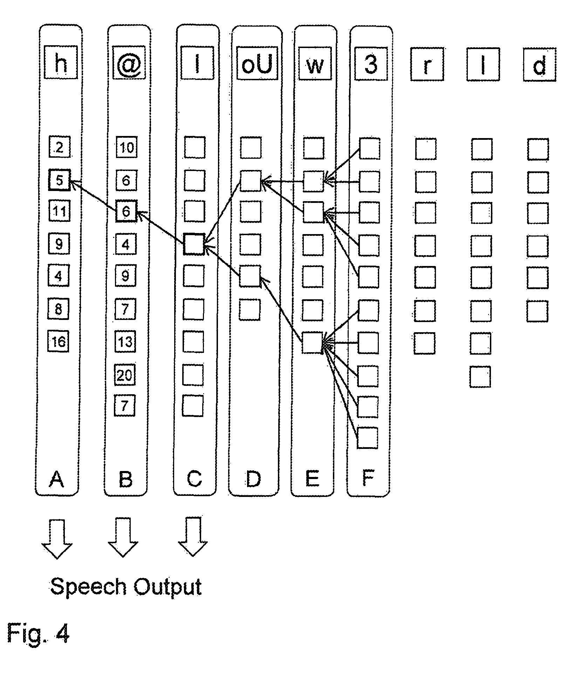

The inventive method is illustrated in figures 4 to 7. The text example to be transformed to speech output is "hello world". The corresponding succession of input linguistic target elements is indicated at the top of the figures. In addition to the indicated target elements there are target characteristics linked to the target elements. Sets of candidate waveform units corresponding to the target elements are listed below the target elements and named with letters A, B, C, D, E, F ... The arrows at the bottom of the figures pointing downwards are indicating the emission of selected waveform unit sequences. The speech output is formed by concatenating waveform units of selected waveform unit sequences.

The method for creating speech output for the text starts with the initial target element "h" and the candidate waveform units assigned to "h". The initial target element is initialized as target element succession S and the candidate waveform units assigned to "h" are initialized as set of waveform unit sequences each consisting of just one waveform unit.

Fig. 4 shows the result of already executed forward steps and backward steps and of a specific forward step in which the target element succession to the target element "w" is extended to form a new target element succession to target element "3", by appending the target element "3" in the forward direction. New sets of waveform unit sequences are assembled by prepending to each candidate waveform unit in F assigned to the target element "3" all waveform unit sequences assigned to the target element succession ending in target element "w". Out of the assembled waveform unit sequences a set of waveform unit sequences assigned to the target element succession ending in target element "3" is selected by taking from each set of waveform unit sequences ending with a specific candidate waveform unit assigned to the target element "3" the waveform unit sequence with the lowest path cost.

An iterative sequence of forward steps is finished after a predetermined number of forward steps. In the example shown in fig. 4 the number of forward steps shown is six. If the iterative sequence would include a seventh step, the new target element succession including "3" would be renamed to the current target element succession. At least the first iterative sequence of forward steps is finished at an intermediate target element that precedes the final target element "d".

In fig. 4 "3" is the intermediate target element where an iterative sequence of forward steps is finished. A set of intermediate waveform unit sequences assigned to the succession of target elements ending in the intermediate target element "3" is indicated by arrows. There are ten arrows (waveform unit sequences) starting at F. Before starting the backward iteration a current reduced set of waveform unit sequences is initializing by setting it to the set of waveform unit sequences assigned to the succession of target elements ending in the intermediate target element "3".
The first backward step consists of,
   removing from each of the ten waveform unit sequences of the set of waveform unit sequences assigned to the succession of target elements ending in the intermediate target element "3" the last waveform unit, resulting in a set of ten truncated waveform unit sequences ending with a waveform unit in E,
   removing seven duplicate waveform unit sequences from the set of ten truncated waveform unit sequences, resulting in a new reduced set of three waveform unit sequences with only one truncated waveform sequence per waveform unit assigned to the target element "w" and being an element of a new waveform unit sequence ending with a waveform unit in E, and
   renaming the new reduced set of waveform unit sequences to the current reduced set of waveform unit sequences for the next backward step.
The second backward step consists of,
   removing from each of the three waveform unit sequences of the current reduced set of waveform unit sequences assigned to the succession of target elements ending in the target element "w" the last waveform unit , resulting in a set of two truncated waveform unit sequences ending with a waveform unit in D,
   removing one duplicate waveform unit sequences from the set of three truncated waveform unit sequences, resulting in a new reduced set of two waveform unit sequences with only one truncated waveform sequence per waveform unit assigned to the target element "oU" and being an element of a new waveform unit sequence ending with a waveform unit in D, and
   renaming the new reduced set of waveform unit sequences to the current reduced set of waveform unit sequences for the next backward step.
The third backward step consists of,
   removing from each of the two waveform unit sequence of the current reduced set of waveform unit sequences assigned to the succession of target elements ending in the target element "oU" the last waveform unit, resulting in a set with only one truncated waveform unit sequence ending with a waveform unit in C,
   removing one duplicate waveform unit sequences from the set of two truncated waveform unit sequences, resulting in a new reduced set with only one waveform unit sequence with only one truncated waveform sequence per waveform unit assigned to the target element "I" and being an element of the new waveform unit sequence ending with a waveform unit in C, and
   renaming the new reduced set of waveform unit sequences to the current reduced set of waveform unit sequences.
The iterative sequence of backward steps is finished because the number of waveform unit sequences in the current reduced set of waveform unit sequences is one.
The waveform unit sequence in the current reduced set of waveform unit sequences is designated as the selected waveform unit sequence. It includes unique waveform units from the candidate waveform units in A, B, and C assigned respecitvely to the target elements "h", "@" and "I".

A speech output is created by concatenating the waveform units from the selected waveform unit sequence to one another.

In general, after truncating and removal of duplicate waveform unit sequences, the number of truncated waveform unit sequences tends to decrease rapidly with each iteration. The reduced set of waveform unit sequences is smaller than the full set of waveform unit sequences for the preceding target element. This is because some candidate unit waveforms for the preceding target element may have a high target cost or high concatenation costs. Such units are typically not elements of waveform unit sequences with lowest path costs.

Selected waveform units in A, B and C are designated at the time of reaching the target element "3" with the forward steps. The selected waveform units in A, B and C are part of the optimal unit sequence that would be the result of the standard Viterbi search. There was no need for a full Viterbi algorithm to the final target element. A speech output (arrows pointing downwards) including the first three selected waveform units in A, B and C can be created. The speech output can be started before reaching the final target element. This segment of the sequence of optimal waveform units can be already emitted after the path costs for the set of waveform units F have been calculated. The calculation of the path costs up until the set of waveform units for the last target element in the sentence is not required. The inventive method allows an early emission of segments of the sequence of selected waveform units. The latency compared to the Viterbi search is thus greatly reduced. In the standard Viterbi algorithm, backtracking is performed once, i.e. at the end of the forward step.

In one embodiment of the disclosed method, backtracking is performed each time after a single forward step. For each target element the path costs for the set of candidate waveform units corresponding to the target element are calculated and in the backward steps the selected waveform unit sequences are found. The complexity of the backtracking is O(n*m), where n is the average number of candidate units per target element and m is the average number of target elements that need to be backtracked until selected waveform unit sequence is found. The complexity of backtracking is low compared to that of the forward step. The number of operations to calculate the forward step for one target element is O( n²) and the number of operations for the backtracking step is O(m*n), where m is typically much smaller than n.

If backtracking is performed for each target element, there is no strict guarantee that for each backtracking step a new selected waveform unit sequence can be emitted. It is possible that for some subsequent target elements, the backtracking ends at the same selected waveform unit sequence. Then for a next target element, the backtracking ends at a new selected waveform unit sequence

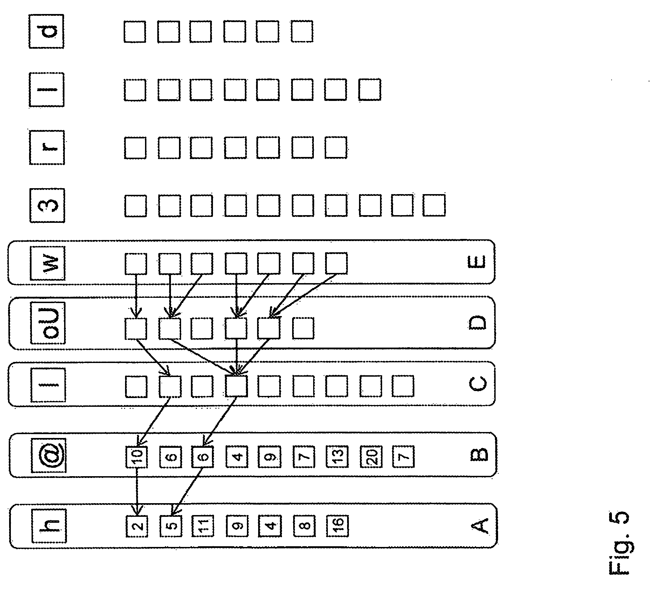

In fig. 4 the backtracking result is shown for target element "3". A unique waveform unit sequence is found and selected in "I". Therefore in fig. 4 a subsequence of three selected units can be emitted. In fig. 5 an example backtracking result is shown for target element "w". Since there are still two truncated waveform unit sequence in "h" there is no unique waveform unit sequence found.

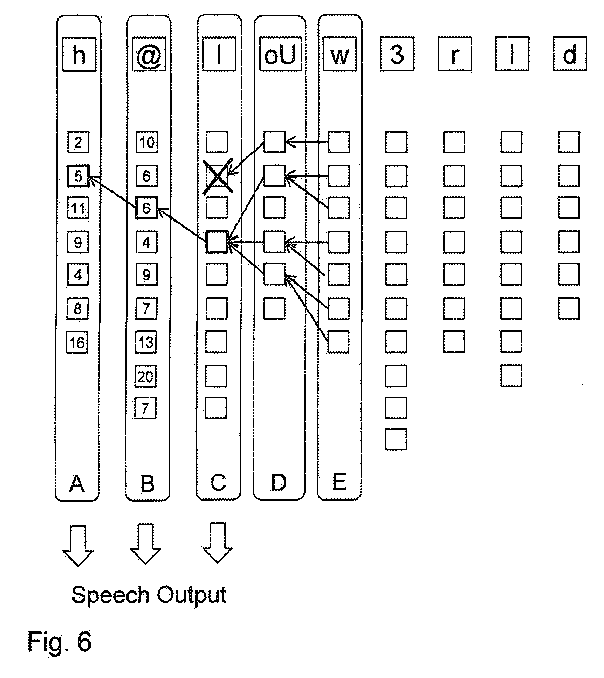

In fig. 6 two alternative stop criterions for the iterative sequence of backward steps are illustrated. After truncating and removal of duplicate waveform unit sequences, the number of truncated waveform unit sequences is still two at the target Element "I". The stop criterion is either the occurrence of a maximum number of two waveform unit sequences or a given number of backward steps, namely two backward steps. The set of waveform units corresponding to target element "I" and belonging to of waveform unit sequences contains two waveform units. Rather than continuing the backward steps and finding out that there is not yet a unique predecessor at the first or second target element or waiting for the next forward step shown in fig. 5, one of the predecessor waveform units corresponding to target element "I" is designated to be a selected waveform unit to be emitted, and the other predecessor is discarded. This method has the advantage that an optimal waveform unit can be emitted without requiring further calculation. Discarding a predecessor assigned to the target element "I" is linked to discarding a waveform unit sequence ending in a candidate waveform unit at target element "w". At the next forward step the discarded waveform unit sequence cannot be prepended to the candidate waveform units assigned to the next target element "3". The emitted waveform unit is no longer guaranteed to be the same unit that would have been emitted by the standard Viterbi algorithm.

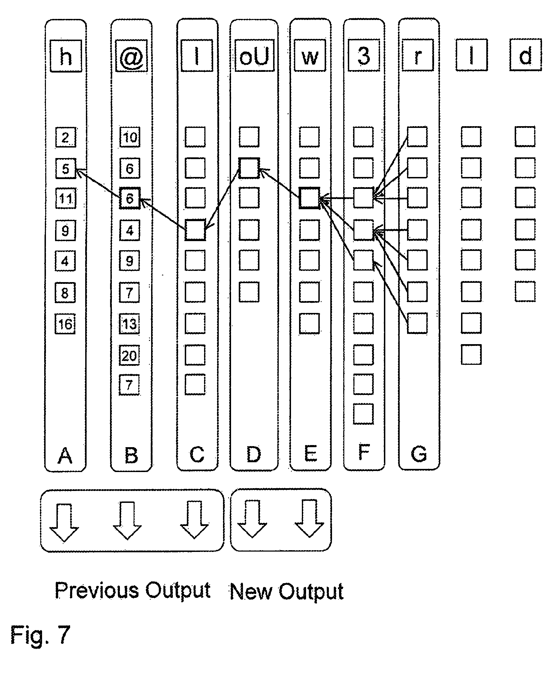

Fig. 7 follows fig. 4 and shows the effect of
resuming the iterative sequence of forward steps at the intermediate target element "3" by keeping in the set of waveform unit sequences assigned to the succession of target elements ending in the intermediate target element "3" the waveform unit sequences that start with the selected waveform unit sequence, and removing from the start of each kept waveform unit sequence the selected waveform unit sequence (previous output), and
performing an iterative sequence of backward steps at a new intermediate target element "r", designating a new selected waveform unit sequence from D and E (new output) and concatenating the waveform units from the new selected waveform unit sequence to the speech output.

This processing can also be described in terms of searching for unique predecessors with a further forward step, a further iterative sequence of backward steps and a further creating of speech output (new output). The further forward step adds the target element "r". The waveform unit sequences for all candidate waveform units in G assigned to the target element "r" are used in the backward step. There are three predecessors in F assigned to the target element "3" and a unique predecessor in E assigned to the target element "w". One further selected waveform unit in D assigned to the target element "oU" is found with a further backward step, where the further selected waveform unit in D is a predecessor in the intermediate waveform unit sequence with the selected waveform unit in E. The selected waveform units assigned to target elements "oU" and "w" are emitted. This is a further segment of the sequence of selected waveform units which can be emitted before reaching the end of the sentence. The second emission was possible without calculating the path costs up until the set of waveform units for the last target element in the sentence.

The iterative sequences of forward steps, backward steps and the creating of speech output are repeated until the forward steps have reached the final target element. For the final target element a selected final waveform unit will be designated, for which the path cost of the waveform unit sequences ending with it is the lowest. After designation of the selected final waveform unit all selected waveform units which have not yet been emitted will be emitted.

In one embodiment, backtracking is performed only after a predetermined number of target elements (predetermined number of forward steps) have been processed. Thus the amount of computation for backtracking is further reduced, and longer sequences of selected waveform units tend to be emitted.

In another embodiment, backtracking is performed for each target element (single forward step) and the sequence of selected waveform units is extended as new unique predecessors are found, but the sequence of selected waveform units is not emitted until it reaches a certain minimal length.

In a preferred embodiment the set of predecessors is tracked by storing a boolean flag for each unit of a set of candidate units. Consider the 4 sets of candidate units in fig. 4, represented by the letters C, D, E, F. Backtracking starts from F. The flags are initialized to FALSE for all units. Then for each unit in F the flag of its predecessor in E is set to TRUE. The number of unique predecessors in E is tracked by incrementing a counter each time a flag is changed from FALSE to TRUE. Next for each unit in E with a TRUE flag, the flag of its predecessor in D is set to TRUE. Next for each unit in D with a TRUE flag, the flag of its predecessor in C is set to TRUE. Since the count of unique predecessors in C is 1, backtracking ends. If the unique predecessor in C is new, for example if preced ing backtracking steps did not yet allow a unique predecessor to be found, a sequence of optimal waveform units can be emitted.

One advantage of the disclosed method is that the size of the working memory decreases as much as the latency. As soon as a subsequence of optimal units has been emitted, the memory needed to store the predecessors for the candidate waveform units of the corresponding target elements is no longer needed and can be freed. If m is the average number of candidate units per target element, n represents the number of target elements in the sentence, and the average length of a backtracking path toward a unique optimal predecessor is N << n, then the number of backpointers in the disclosed method is N*m compared to n*m in the standard Viterbi search.

In a typical embodiment the data stored for each candidate waveform unit during the Viterbi search includes a waveform unit identifier and linguistic and acoustic features defining characteristics of the waveform unit. The waveform unit identifier and waveform unit characteristics are provided from a database of waveform units.

The stored data are used to calculate the target and concatenation costs. Waveform unit data of non-selected waveform units can be discarded for waveform units corresponding to input linguistic target elements with unique respectively selected waveform units two to the left from the current position. For selected waveform units unit identifiers and waveform unit characteristics, as for example f0, duration, and other information needed for signal generation will be stored. This information must not necessarily be stored but storing avoids the potentially slow access to this data during unit concatenation and modification.

Assuming 100 candidates per target and 100 targets in a sentence this defines a memory need of 100 * 100 * 16 Bytes = 160kB during the Viterbi search. The memory need increases linearly with the sentence length and the number of candidates considered per target.

In a preferred embodiment the memory need is reduced if only those candidates are kept that are still used after the backtracking step has been performed. Alternatively all cand i-dates waveform units for each target element are kept in memory until the unique predecessor corresponding to the target element is found. This is motivated by the fact that it is more efficient to free all candidate waveform units for one target element at once to the memory management.

## Claims

1. A method for creating a speech output from a succession of input linguistic target elements including target characteristics, where the speech output is formed by concatenating a sequence of selected waveform units, each selected waveform unit corresponding to an input linguistic target element, said method comprising the steps of receiving the succession of input linguistic target elements including target characteristics in a time ranked order, starting with an initial target element and ending with a final target element, the ranked order increasing with time corresponding to a forward direction and the ranked order decreasing with time corresponding to a backward direction,
assigning to each target element a set of candidate waveform units including candidate characteristics provided from a database of waveform units,
allocating target costs to the assigned candidate waveform units, the target costs expressing a mismatch between the candidate characteristics and the target characteristics of the target element,
allocating concatenation costs to pairs of successive candidate waveform units assigned to pairs of successive target elements,
allocating path costs to waveform unit sequences assigned to a succession of target elements, where the path costs are a function of target costs and concatenation costs of the waveform units in the sequence,
initializing a current succession of target elements by setting it to the initial target element and initializing a current set of waveform unit sequences assigned to the current succession of target elements by setting each waveform unit sequence in the set to a different candidate waveform unit assigned to the initial target element,
performing an iterative sequence of forward steps, where a forward step consists of extending the current succession of target elements to form a new succession of target elements, by appending the next target element in the forward direction,
calculating a new set of waveform unit sequences assigned to the new succession of target elements by prepending to each candidate waveform unit assigned to the next target element the waveform unit sequence from the current set of waveform unit sequences for which the path cost of the resulting waveform unit sequence is the lowest,
renaming the new target element succession to the current target element succession for the next forward step,
finishing the iterative sequence of forward steps at an intermediate target element that precedes the final target element,
initializing a current reduced set of waveform unit sequences by setting it to the set of waveform unit sequences assigned to the succession of target elements ending in the intermediate target element,
performing an iterative sequence of backward steps, where a backward step consists of
removing from each waveform unit sequence of the current reduced set of-waveform unit sequences the last waveform unit, resulting in a set of truncated waveform unit sequences,
removing duplicate waveform unit sequences from the set of truncated waveform unit sequences, resulting in a new reduced set of waveform unit sequences,
renaming the new reduced set of waveform unit sequences to the current reduced set of waveform unit sequences for the next backward step,
finishing the iterative sequence of backward steps when a predetermined limit is reached for one of the number of backward steps and the number of waveform unit sequences in the current reduced set of waveform unit sequences,
designating one of the waveform unit sequences in the current reduced set of waveform unit sequences as the selected waveform unit sequence,
creating a speech output by concatenating the waveform units from the selected waveform unit sequence to one another,
resuming the iterative sequence of forward steps at the intermediate target element by keeping in the set of waveform unit sequences assigned to the succession of target elements ending in the intermediate target element the waveform unit sequences that start with the selected waveform unit sequence, and removing from the start of each kept waveform unit sequence the selected waveform unit sequence,
performing an iterative sequence of backward steps at a new intermediate target element, designating a new selected waveform unit sequence, and concatenating the waveform units from the new selected waveform unit sequence to the speech output,
repeating the steps of resuming the iterative sequence of forward steps and performing an iterative sequence of backward steps until the iterative sequence of forward steps has reached the final target element, where from the set of waveform unit sequences assigned to the succession of target elements ending in the final target element the waveform unit sequence with the lowest path cost is designated as the selected waveform unit sequence and the waveform units from the selected waveform unit sequence are concatenated to the speech output.

2. Method as claimed in claim 1, where a waveform unit sequence is represented by the last waveform unit in the sequence and a backpointer is kept for each candidate waveform unit assigned to a target element, and during each forward step the backpointer of each candidate waveform unit assigned to the next target element is set to an optimal predecessor waveform unit from the set of candidate waveform units assigned to the current target element resulting in the lowest path cost of all waveform unit sequences ending in said candidate waveform unit, and the backpointer of the initial waveform unit of a waveform unit sequence is set to a predetermined constant.

3. Method as claimed in one of claims 1 and 2, where computer memory occupied by candidate waveform units assigned to a target element is freed when one of the candidate waveform units is an element of a selected waveform unit sequence.

4. Method as claimed in one of claims 1 to 3, where each next target element in forward direction is an intermediate target element for which the iterative sequence of backward steps is performed.

5. Method as claimed in one of claims 1 to 3, where each sequence of forward steps is finished after a predetermined number of next target elements in forward direction have been appended to the succession of target elements and the predetermined number is larger than one.

6. Method as claimed in one of claims 1 to 5, where the iterative sequence of backward steps is finished when the number of waveform unit sequences in the current reduced set of waveform unit sequences is exactly one.

7. Method as claimed in one of claims 1 to 5, where the iterative sequence of backward steps is finished when the number of waveform unit sequences in the current reduced set of waveform unit sequences is a predetermined number larger than one and the waveform unit sequence with the lowest path cost is designated as the selected waveform unit sequence.

8. Method as claimed in one of claims 1 to 5, where the iterative sequence of backward steps is finished when the number of backward steps is a predetermined number and the waveform unit sequence with the lowest path cost is designated as the selected waveform unit sequence.

9. Method as claimed in one of claims 1 to 7, where one of the predetermined number of next target elements in forward direction and the predetermined number of waveform unit sequences in the reduced set of waveform unit sequences is adjusted to guarantee a speech output after a predetermined amount of computation time.

10. A computer program comprising program code means for performing all the steps of any one of the claims 1 to 8 when said program is run on a computer.

11. A non-transitory computer readable medium comprising program code for performing all the steps of one of the claims 1 to 8 when said program is run on a computer.

## Patentansprüche

1. Verfahren zum Erstellen einer Sprachausgabe aus einer Folge von eingegebenen linguistischen Zielelementen, welche Zieleigenschaften enthalten, wobei die Sprachausgabe durch Verketten einer Sequenz aus ausgewählten Wellenformeinheiten gebildet ist und jede ausgewählte Wellenformeinheit einem eingegebenen linguistischen Zielelement entspricht, wobei das Verfahren folgende Verfahrensschritte aufweist:
Empfangen der Folge von eingegebenen linguistischen Zielelementen, welche Zieleigenschaften enthalten, in einer zeitlichen Rangordnung, die mit einem initialen Zielelement beginnt und mit einem finalen Zielelement endet, wobei die Rangordnung mit der Zeit entsprechend einer Vorwärtsrichtung ansteigt und die Rangordnung mit der Zeit entsprechend einer Rückwärtsrichtung absteigt,
Zuweisen eines Satzes von Kandidatenwellenformeneinheiten, welche Kandidateneigenschaften enthalten und aus einer Datenbank für Wellenformeinheiten zur Verfügung gestellt werden, zu jedem Zielelement, Zuordnen von Zielkosten zu den zugewiesenen
Kandidatenwellenformeinheiten, wobei die Zielkosten eine Abweichung zwischen den Kandidateneigenschaften und den Zieleigenschaften des Zielelements ausdrücken,
Zuordnen von Verkettungskosten zu Paaren von aufeinanderfolgenden Kandidatenwellenformeinheiten, die Paaren von aufeinanderfolgenden Zielelementen zugewiesen sind,
Zuordnen von Pfadkosten zu Sequenzen aus Wellenformeinheiten, die einer Folge von Zielelementen zugeordnet sind, wobei die Pfadkosten von Zielkosten und Verkettungskosten der Wellenformeinheiten in der Sequenz abhängig sind,
Initialisieren einer aktuellen Folge von Zielelementen, indem diese auf das initiale Zielelement gesetzt wird, und Initialisieren eines aktuellen Satzes von Sequenzen aus Wellenformeinheiten, die der aktuellen Folge von Zielelementen zugewiesen sind, indem jede Sequenz aus Wellenformeinheiten in dem Satz auf eine unterschiedliche Kandidatenwellenformeinheit, die dem initialen Zielelement zugewiesen ist, gesetzt wird,
Durchführen einer iterativen Sequenz aus Vorwärtsschritten, wobei ein Vorwärtsschritt aus folgenden Schritten besteht:
Erweitern der aktuellen Folge von Zielelementen, um eine neue Folge von Zielelementen zu bilden, indem das nächste Zielelement in Vorwärtsrichtung angehängt wird,
Berechnen eines neuen Satzes von Sequenzen aus Wellenformeinheiten, die der neuen Folge von Zielelementen zugewiesen sind, indem jeder Kandidatenwellenformeinheit, die dem nächsten Zielelement zugewiesen ist, die Sequenz aus Wellenformeinheiten aus dem aktuellen Satz von Sequenzen aus Wellenformeinheiten vorangestellt wird, für die die Pfadkosten der resultierenden Sequenz aus Wellenformeinheiten am niedrigsten sind, Umbenennen der neuen Folge von Zielelementen in die aktuelle Folge von Zielelementen für den nächsten Vorwärtsschritt,
Beenden der iterativen Sequenz aus Vorwärtsschritten bei einem zwischenliegenden Zielelement, welches dem finalen Zielelement vorangeht, Initialisieren eines aktuellen reduzierten Satzes von Sequenzen aus Wellenformeinheiten, indem dieser auf den Satz von Sequenzen aus Wellenformeinheiten gesetzt wird, welcher der Folge von Zielelementen zugeordnet ist, die in dem zwischenliegenden Zielelement enden,
Durchführen einer iterativen Sequenz aus Rückwärtsschritten, wobei ein Rückwärtsschritt aus folgenden Verfahrensschritten besteht:
Entfernen der letzten Wellenformeinheit aus jeder Sequenz aus Wellenformeinheiten des aktuellen reduzierten Satzes von Sequenzen aus Wellenformeinheiten, was zu einem Satz von verkürzten Sequenzen aus Wellenformeinheiten führt,
Entfernen von doppelten Sequenzen aus Wellenformeinheiten aus dem Satz von verkürzten Sequenzen aus Wellenformeinheiten, was zu einem neuen reduzierten Satz von Sequenzen aus Wellenformeinheiten führt,
Umbenennen des neuen reduzierten Satzes von Sequenzen aus Wellenformeinheiten in den aktuellen reduzierten Satz von Sequenzen aus Wellenformeinheiten für den nächsten Rückwärtsschritt,
Beenden der iterativen Sequenz aus Rückwärtsschritten, wenn ein vorbestimmter Grenzwert für einen aus der Anzahl von Rückwärtsschritten und eine aus der Anzahl von Sequenzen aus Wellenformeinheiten in dem aktuellen reduzierten Satz von Sequenzen aus Wellenformeinheiten erreicht ist,
Kennzeichnen einer der Sequenzen aus Wellenformeinheiten in dem aktuellen reduzierten Satz von Sequenzen aus Wellenformeinheiten als die ausgewählte Sequenz aus Wellenformeinheiten,
Erstellen einer Sprachausgabe, indem die Wellenformeinheiten aus der ausgewählten Sequenz aus Wellenformeinheiten miteinander verkettet werden,
Wiederaufnehmen der iterativen Sequenz aus Vorwärtsschritten bei dem zwischenliegenden Zielelement, indem in dem Satz von Sequenzen aus Wellenformeinheiten, die der Folge von Zielelementen zugewiesen sind,
welche in dem zwischenliegenden Zielelement enden, die Sequenzen aus Wellenformeinheiten einbehalten werden, die mit der ausgewählten Sequenz aus Wellenformeinheiten beginnen, und indem aus dem Start jeder einbehaltenen Sequenz aus Wellenformeinheiten die ausgewählte Sequenz aus Wellenformeinheiten entfernt wird,
Durchführen einer iterativen Sequenz aus Rückwärtsschritten bei einem neuen zwischenliegenden Zielelement, Kennzeichnen einer neuen ausgewählten Sequenz aus Wellenformeinheiten und Verketten der Wellenformeinheiten aus der neuen ausgewählten Sequenz aus Wellenformeinheiten zu der Sprachausgabe,
Wiederholen der Verfahrensschritte, die aus dem Wiederaufnehmen der iterativen Sequenz aus Vorwärtsschritten und dem Durchführen einer iterativen Sequenz aus Rückwärtsschritten bestehen, bis die iterative Sequenz aus Vorwärtsschritten das finale Zielelement erreicht hat, wo aus dem Satz von Sequenzen aus Welleneinheiten, die der Folge von Zielelementen zugewiesen sind, welche in dem finalen Zielelement enden, die Sequenz aus Wellenformeinheiten mit den niedrigsten Pfadkosten als die ausgewählte Sequenz aus Wellenformeinheiten gekennzeichnet wird und die Wellenformeinheiten aus der ausgewählten Sequenz aus Wellenformeinheiten zu der Sprachausgabe verkettet werden.

2. Verfahren nach Anspruch 1, wobei eine Sequenz aus Wellenformeinheiten durch die letzte Wellenformeinheit in der Sequenz dargestellt wird und ein Rückverweis für jede Kandidatenwellenformeinheit einbehalten wird, die einem Zielelement zugewiesen ist, und bei jedem Vorwärtsschritt der Rückverweis jeder Kandidatenwellenformeinheit, die dem nächsten Zielelement zugewiesen ist, auf eine optimale vorangehende Wellenformeinheit aus dem Satz von Kandidatenwellenformeinheiten, die dem aktuellen Zielelement zugewiesen sind, gesetzt wird, was zu den niedrigsten Pfadkosten aller Sequenzen aus Wellenformeinheiten, die in der Kandidatenwellenformeinheit enden, führt, und der Rückverweis der initialen Wellenformeinheit einer Sequenz aus Wellenformeinheiten auf eine vorbestimmte Konstante gesetzt wird.

3. Verfahren nach einem der Ansprüche 1 und 2, wobei ein Computerspeicher, der von Kandidatenwellenformeinheiten belegt ist, die einem Zielelement zugewiesen sind, freigegeben wird, wenn es sich bei einer der Kandidatenwellenformeinheiten um ein Element einer ausgewählten Sequenz aus Wellenformeinheiten handelt.

4. Verfahren nach einem der Ansprüche 1 bis 3, wobei es sich bei jedem nächsten Zielelement in Vorwärtsrichtung um ein zwischenliegendes Zielelement handelt, für das die iterative Sequenz aus Rückwärtsschritten durchgeführt wird.

5. Verfahren nach einem der Ansprüche 1 bis 3, wobei jede Sequenz aus Vorwärtsschritten beendet ist, nachdem eine vorbestimmte Anzahl von nächsten Zielelementen in Vorwärtsrichtung an die Folge von Zielelementen angehängt worden ist und die vorbestimmte Anzahl größer als eins ist.

6. Verfahren nach einem der Ansprüche 1 bis 5, wobei die iterative Sequenz aus Rückwärtsschritten beendet ist, wenn die Anzahl von Sequenzen aus Wellenformeinheiten in dem aktuellen Satz von Sequenzen aus Wellenformeinheiten exakt eins beträgt.

7. Verfahren nach einem der Ansprüche 1 bis 5, wobei die iterative Sequenz aus Rückwärtsschritten beendet ist, wenn es sich bei der Anzahl von Sequenzen aus Wellenformeinheiten in dem aktuellen reduzierten Satz von Sequenzen aus Wellenformeinheiten um eine vorbestimmte Anzahl handelt, die größer als eins ist, und die Sequenz aus Wellenformeinheiten mit den niedrigsten Pfadkosten als die ausgewählte Sequenz aus Wellenformeinheiten gekennzeichnet ist.

8. Verfahren nach einem der Ansprüche 1 bis 5, wobei die iterative Sequenz aus Rückwärtsschritten beendet ist, wenn es sich bei der Anzahl von Rückwärtsschritten um eine vorbestimmte Anzahl handelt und die Sequenz aus Wellenformeinheiten mit den niedrigsten Pfadkosten als die ausgewählte Sequenz aus Wellenformeinheiten gekennzeichnet ist.

9. Verfahren nach einem der Ansprüche 1 bis 7, wobei eines aus der vorbestimmten Anzahl von nächsten Zielelementen in Vorwärtsrichtung und eine aus der vorbestimmten Anzahl von Sequenzen aus Wellenformeinheiten in dem reduzierten Satz von Sequenzen aus Wellenformeinheiten so eingestellt sind, dass eine Sprachausgabe nach einem vorbestimmten Betrag an Rechenzeit gewährleistet ist.

10. Computerprogramm, welches Programmcodemittel aufweist, mit dem alle Schritte nach einem der Ansprüche 1 bis 8 durchgeführt werden können, wenn das Programm auf einem Computer läuft.

11. Nicht-transitorisches computerlesbares Medium, welches einen Programmcode aufweist, mit dem alle Schritte nach einem der Ansprüche 1 bis 8 durchgeführt werden können, wenn das Programm auf einem Computer läuft.

## Revendications

1. Procédé de création d'une sortie vocale à partir d'une succession d'éléments cibles linguistiques entrés incluant des caractéristiques cibles, où la sortie vocale est formée en concaténant une séquence d'unités de forme d'onde sélectionnées, chaque unité de forme d'onde sélectionnée correspondant à un élément cible linguistique entré, ledit procédé comprenant les étapes consistant à
recevoir la succession d'éléments cibles linguistiques entrés incluant des caractéristiques cibles dans un ordre classé dans le temps, en commençant par un élément cible initial et finissant par un élément cible final, l'ordre classé augmentant avec le temps correspondant à une direction vers l'avant et l'ordre classé diminuant avec le temps correspondant à une direction vers l'arrière, attribuer à chaque élément cible un ensemble d'unités de forme d'onde candidates incluant des caractéristiques candidates fournies à partir d'une base de données d'unités de forme d'onde,
allouer des coûts cibles aux unités de forme d'onde candidates attribuées, les coûts cibles exprimant une discordance entre les caractéristiques candidates et les caractéristiques cibles de l'élément cible,
allouer des coûts de concaténation à des paires d'unités de forme d'onde candidates successives attribuées à des paires d'éléments cibles successifs, allouer des coûts de chemin à des séquences d'unités de forme d'onde attribuées à une succession d'éléments cibles, où les coûts de chemin sont une fonction des coûts cibles et des coûts de concaténation des unités de forme d'onde dans la séquence,
initialiser une succession actuelle d'éléments cibles en la réglant sur l'élément cible initial et initialiser un ensemble actuel de séquences d'unités de forme d'onde attribuées à la succession actuelle d'éléments cibles en réglant chaque séquence d'unités de forme d'onde dans l'ensemble sur une unité de forme d'onde candidate différente attribuée à l'élément cible initial,
réaliser une séquence itérative de pas vers l'avant, où un pas vers l'avant consiste en l'extension de la succession actuelle d'éléments cibles pour former une nouvelle succession d'éléments cibles en annexant l'élément cible suivant dans la direction vers l'avant,
calculer un nouvel ensemble de séquences d'unités de forme d'onde attribuées à la nouvelle succession d'éléments cibles en préfixant sur chaque unité de forme d'onde candidate attribuée à l'élément cible suivant la séquence d'unités de forme d'onde provenant de l'ensemble actuel de séquences d'unités de forme d'onde pour laquelle le coût de chemin de la séquence d'unités de forme d'onde résultante est le plus faible,
renommer la nouvelle succession d'éléments cibles en la succession d'éléments cibles actuelle pour le pas vers l'avant suivant,
finir la séquence itérative de pas vers l'avant au niveau d'un élément cible intermédiaire qui précède l'élément cible final,
initialiser un ensemble actuel réduit de séquences d'unités de forme d'onde en le réglant sur l'ensemble de séquences d'unités de forme d'onde attribuées à la succession d'éléments cibles finissant par l'élément cible intermédiaire, réaliser une séquence itérative de pas vers l'arrière, où un pas vers l'arrière consiste en
éliminer de chaque séquence d'unités de forme d'onde de l'ensemble actuel réduit de séquences d'unités de forme d'onde la dernière unité de forme d'onde, résultant en un ensemble de séquences d'unités de forme d'onde tronquées,
éliminer des séquences d'unités de forme d'onde en double de l'ensemble de séquences d'unités de forme d'onde tronquées, résultant en un nouvel ensemble réduit de séquences d'unités de forme d'onde,
renommer le nouvel ensemble réduit de séquences d'unités de forme d'onde en l'ensemble actuel réduit de séquences d'unités de forme d'onde pour le pas vers l'arrière suivant,
finir la séquence itérative de pas vers l'arrière lorsqu'une limite prédéterminée est atteinte pour un élément parmi le nombre de pas vers l'arrière et le nombre de séquences d'unités de forme d'onde dans l'ensemble actuel réduit de séquences d'unités de forme d'onde,
désigner une des séquences d'unités de forme d'onde dans l'ensemble actuel réduit de séquences d'unités de forme d'onde comme la séquence d'unités de forme d'onde sélectionnée,
créer une sortie vocale en concaténant les unités de forme d'onde à partir de la séquence d'unités de forme d'onde sélectionnée les unes aux autres, reprendre la séquence itérative de pas vers l'avant au niveau de l'élément cible intermédiaire en conservant dans l'ensemble de séquences d'unités de forme d'onde attribuées à la succession d'éléments cibles finissant par l'élément cible intermédiaire les séquences d'unités de forme d'onde qui commencent par la séquence d'unités de forme d'onde sélectionnée, et éliminant du début de chaque séquence d'unités de forme d'onde conservée la séquence d'unités de forme d'onde sélectionnée,
réaliser une séquence itérative de pas vers l'arrière au niveau d'un nouvel élément cible intermédiaire, désigner une nouvelle séquence d'unités de forme d'onde sélectionnée et concaténer les unités de forme d'onde provenant de la nouvelle séquence d'unités de forme d'onde sélectionnée en la sortie vocale,
répéter les étapes de reprise de la séquence itérative de pas vers l'avant et réaliser une séquence itérative de pas vers l'arrière jusqu'à ce que la séquence itérative de pas vers l'avant ait atteint l'élément cible final, où, parmi l'ensemble de séquences d'unités de forme d'onde attribuées à la succession d'éléments cibles finissant par l'élément cible final, la séquence d'unités de forme d'onde avec le coût de chemin le plus faible est désignée comme la séquence d'unités de forme d'onde sélectionnée et les unités de forme d'onde provenant de la séquence d'unités de forme d'onde sélectionnée sont concaténées en la sortie vocale.

2. Procédé selon la revendication 1, où une séquence d'unités de forme d'onde est représentée par la dernière unité de forme d'onde dans la séquence et un rétrocentreur est conservé pour chaque unité de forme d'onde candidate attribuée à un élément cible, et au cours de chaque pas vers l'avant, le rétrocentreur de chaque unité de forme d'onde candidate attribuée à l'élément cible suivant est réglé sur une unité de forme d'onde prédécesseur optimale parmi l'ensemble d'unités de forme d'onde candidates attribuées à l'élément cible actuel, résultant en le coût de chemin le plus faible de toutes les séquences d'unités de forme d'onde finissant par ladite unité de forme d'onde candidate, et le rétrocentreur de l'unité de forme d'onde initiale d'une séquence d'unités de forme d'onde est réglé sur une constante prédéterminée.

3. Procédé selon une des revendications 1 et 2, où de la mémoire informatique occupée par des unités de forme d'onde candidates attribuées à un élément cible est libérée lorsqu'une des unités de forme d'onde candidates est un élément d'une séquence d'unités de forme d'onde sélectionnée.

4. Procédé selon une des revendications 1 à 3, où chaque élément cible suivant dans la direction vers l'avant est un élément cible intermédiaire pour lequel la séquence itérative de pas vers l'arrière est réalisée.

5. Procédé selon une des revendications 1 à 3, où chaque séquence de pas vers l'avant est finie après qu'un nombre prédéterminé d'éléments cibles suivants dans la direction vers l'avant a été annexé à la succession d'éléments cibles et le nombre prédéterminé est supérieur à un.

6. Procédé selon une des revendications 1 à 5, où la séquence itérative de pas vers l'arrière est finie lorsque le nombre de séquences d'unités de forme d'onde dans l'ensemble actuel réduit de séquences d'unités de forme d'onde est de un exactement.

7. Procédé selon une des revendications 1 à 5, où la séquence itérative de pas vers l'arrière est finie lorsque le nombre de séquences d'unités de forme d'onde dans l'ensemble actuel réduit de séquences d'unités de forme d'onde est un nombre prédéterminé supérieur à un et la séquence d'unités de forme d'onde avec le coût de chemin le plus faible est désignée comme la séquence d'unités de forme d'onde sélectionnée.

8. Procédé selon une des revendications 1 à 5, où la séquence itérative de pas vers l'arrière est finie lorsque le nombre de pas vers l'arrière est un nombre prédéterminé et la séquence d'unités de forme d'onde avec le coût de chemin le plus faible est désignée comme la séquence d'unités de forme d'onde sélectionnée.

9. Procédé selon une des revendications 1 à 7, où un élément parmi le nombre prédéterminé d'éléments cibles suivants dans la direction vers l'avant et le nombre prédéterminé de séquences d'unités de forme d'onde dans l'ensemble réduit de séquences d'unités de forme d'onde est ajusté pour garantir une sortie vocale après une quantité prédéterminée de temps de calcul.

10. Programme informatique comprenant un moyen de code de programme pour réaliser toutes les étapes selon l'une quelconque des revendications 1 à 8 lorsque ledit programme est exécuté sur un ordinateur.

11. Support non transitoire lisible par ordinateur comprenant du code de programme pour réaliser toutes les étapes selon une des revendications 1 à 8 lorsque ledit programme est exécuté sur un ordinateur.
